# FASCICULE DE BREVET EUROPEEN

(11) **EP 2 307 277 B1**
(45) Date de publication et mention de la délivrance du brevet: **04.01.2012**
(21) Numéro de dépôt: 09784429.4
(22) Date de dépôt: 24.06.2009
(51) Int. Cl.: B64G 1/22

(54) **MÂT DÉPLOYABLE À OSSATURE REPLIÉE SPONTANÉMENT DÉPLOYABLE ET RIGIDE À L'ÉTAT DÉPLOYÉ**
AUSBRINGBARER MAST MIT EINER SELBSTAUSBRINGBAREN KLAPPSTRUKTUR, DER IM AUSGEBRACHTEN ZUSTAND STARR IST
EXTENDABLE MAST HAVING A SELF-EXTENDING FOLDED STRUCTURE THAT IS RIGID IN THE EXTENDED STATE

(30) Priorité: 25.06.2008 FR 0803571
(43) Date de publication de la demande: 13.04.2011
(73) Titulaire: Centre National d'Etudes Spatiales (C.N.E.S.), 75039 Paris Cedex 01 (FR)
(72) Inventeur: CASTERAS, Christophe, F-31400 Toulouse (FR)
(74) Mandataire: Cabinet BARRE LAFORGUE & associés
(86) Numéro de dépôt international: PCT/FR2009/051205
(87) Numéro de publication internationale: WO 2010/004168

(56) Documents cités:
- EP-A- 0 858 946
- FR-A- 2 876 984
- US-A- 5 580 013

## Description

L'invention concerne un mât déployable, et en particulier un mât spatial déployable destiné à être embarqué sur un système spatial (par exemple satellite spatial artificiel, sonde spatiale, véhicule spatial...).

Un mât spatial peut servir par exemple à porter un capteur (magnétomètre, laser, caméra, émetteur, récepteur...) à son extrémité distale, de façon à l'éloigner du corps principal du système spatial, pour effectuer des mesures sur ce corps principal et/ou être hors de son influence (notamment de nature électromagnétique (parasites), optique (masquage), gravitationnelle ou inertielle). Un mât spatial peut également être utilisé par exemple pour le déploiement d'organes mécaniques tels que : voile de freinage d'un satellite permettant d'en ajuster l'orbite, ou baffle de télescope, ou structure légère déployable de grandes dimensions. Pour des raisons d'encombrement, un tel mât, dont la longueur doit pouvoir être de plusieurs mètres, doit être replié au lancement et déployé uniquement lorsque le système spatial est dans l'espace -notamment en orbite- en position d'utilisation du mât.

Un tel mât déployable peut également être utilisé dans des applications terrestres dans lesquelles les mêmes problèmes peuvent se poser : support en hauteur de caméra, détecteur, émetteur, récepteur, capteurs divers etc.. Par exemple, un tel mât déployable peut aussi être utilisé dans la fabrication de structures pliables/ déployables, par exemple des abris provisoires, des tentes, des chapiteaux etc..

On connaît principalement deux catégories distinctes de mâts déployables.

Un mât déployable selon la première catégorie connue est formé d'une structure comprenant une pluralité de segments rigides articulés (cf. par exemple EP 0858946 et US 5580013) et/ou telescopiques (cf. par exemple US 5315795), ou une bande déployée de façon hélicoïdale, cette structure étant associée à un dispositif motorisé de déploiement. Un tel mât présente en général l'inconvénient d'un poids et d'un encombrement, même à l'état replié, relativement importants, d'une certaine complexité et d'un coût élevé.

Un mât déployable selon la deuxième catégorie connue est formé d'un tube gonflable (cf. par exemple FR 2876984 ou US 2004/0046085). Un tel mât présente l'avantage d'une plus grande légèreté, d'une plus grande simplicité, d'un faible coût. Il présente néanmoins l'inconvénient d'une mauvaise maîtrise de ses dimensions et de sa rigidité à l'état déployé, et ce aussi bien en flexion qu'en compression axiale. De plus, il nécessite pour son déplacement une source de gaz comprimé, lourde et encombrante.

L'invention vise donc à pallier l'ensemble de ces inconvénients en proposant un mât déployable qui, simultanément, soit d'une grande légèreté, présente un faible poids et un encombrement minimum à l'état replié, et qui, à l'état déployé, soit d'une grande rigidité en flexion et en compression axiale et présente des dimensions précisément déterminées.

L'invention vise également à proposer un tel mât déployable qui soit d'un faible coût, facile et fiable à déployer, puisse être réalisé dans des matériaux compatibles avec une application spatiale, mais puisse aussi faire l'objet d'applications terrestres.

Pour ce faire, l'invention concerne un mât déployable selon un axe de déploiement longitudinal comprenant :
- une ossature formée d'une succession d'étages articulés les uns aux autres deux à deux en prolongement les uns des autres selon l'axe de déploiement, ladite ossature étant adaptée pour pouvoir être placée, soit dans un état replié où les étages sont repliés les uns sur les autres longitudinalement et occupent un encombrement axial minimum, soit dans un état déployé où ils définissent une forme prédéterminée,
- un dispositif de commande du déclenchement du déploiement associé à ladite ossature de façon à pouvoir autoriser son déploiement longitudinal à l'état déployé à partir de l'état replié,
- les étages sont articulés les uns aux autres par des charnières, chaque charnière étant contenue dans un plan transversal orthogonal à l'axe de déploiement, de sorte que, dans l'état replié, l'ossature soit repliée en accordéon,
- chaque étage de l'ossature comprend au moins trois plaquettes articulées deux à deux, et s'étend en forme générale de couronne autour de l'axe de déploiement,
caractérisé en ce que:
- chaque plaquette présente au repos une forme générale courbe,
- les plaquettes de chaque étage de l'ossature et les liaisons d'articulation des plaquettes entre elles et entre les étages sont adaptées pour que, dans l'état déployé de l'ossature :
   - chaque plaquette présente une section droite transversale de forme courbe autour de l'axe de déploiement,
   - l'ossature adopte du fait de sa géométrie et de son assemblage, une forme stable rigide en compression axiale, avec un effet de blocage en flambage interdisant tout repliage intempestif des plaquettes et des étages (les uns par rapport aux autres selon l'axe de déploiement.

Dans un mât selon l'invention, chaque plaquette est, au repos (c'est-à-dire en l'absence de déformation) de forme courbe, c'est-à-dire ne s'étend pas dans un plan (dans tout le texte, le terme « courbe » appliqué à une forme surfacique désigne de façon générale toute surface dans l'espace non confondue avec un plan). Avantageusement un mât selon l'invention est aussi caractérisé en ce que chaque plaquette est d'un seul tenant, rigide en flexion selon une direction longitudinale contenue dans un plan longitudinal passant par l'axe de déploiement, mais flexible selon une direction, dite direction transversale, orthogonale à la direction longitudinale, et en ce que la forme au repos de chaque plaquette est adaptée pour que, à l'état replié, chaque plaquette soit déformée élastiquement en flexion avec des contraintes élastiques de flexion aptes à au moins initier le déploiement de l'ossature à partir de l'état replié. Par ailleurs, avantageusement et selon l'invention, la forme au repos de chaque plaquette est adaptée pour que, à l'état déployé, chaque plaquette présente une forme correspondant soit à sa forme au repos, soit à une forme dans laquelle elle est déformée élastiquement en flexion avec des contraintes élastiques de déformation en flexion inférieures aux contraintes élastiques de flexion de la plaquette à l'état replié. Plus particulièrement, dans un mât selon l'invention, les plaquettes sont aplaties à l'état replié, c'est-à-dire déformées à partir de leur forme courbe au repos de façon à diminuer leur courbure pour les rendre plus plates. En conséquence, l'ossature est plus stable à l'état déployé qu'à l'état replié et tend donc à se déployer spontanément.

Une telle ossature se déploie spontanément et présente une forme stable et se verrouillant par construction à l'état déployé en formant un blocage en flambage. Elle peut faire l'objet de différents modes de réalisation.

Le nombre de plaquettes de chaque étage d'une ossature d'un mât selon l'invention peut faire l'objet de diverses variantes. De préférence, les différents étages comportent tous un même nombre de plaquettes de mêmes dimensions, l'ossature présentant une forme générale cylindrique, notamment cylindrique de révolution, à l'état déployé. Rien n'empêche, en variante, cependant de prévoir que l'ossature présente, à l'état déployé, une autre forme que globalement tubulaire cylindrique de révolution, par exemple une forme de type tronconique, le nombre des plaquettes et/ou les dimensions des plaquettes de chaque étage pouvant varier le long de l'axe de déploiement. En particulier, dans une variante conforme à l'invention, les plaquettes présentent une largeur variable, croissante ou décroissante, d'un étage à l'autre -notamment chaque plaquette présente une largeur variable depuis sa partie proximale jusqu'à sa partie distale-, de sorte que l'ossature présente une forme générale monocylindrique -notamment tronconique de révolution- à l'état déployé.

Chaque plaquette constitue, à l'état déployé de l'ossature, un élément constitutif de l'ossature qui lui confère sa forme et ses propriétés mécaniques, notamment en termes de rigidité et de résistance. Dans tout le texte, le terme « plaquette » englobe tout élément d'un seul tenant présentant une dimension (épaisseur) sensiblement plus faible que les autres, c'est-à-dire non seulement une portion de plaque pleine de petite dimension, mais également toute structure équivalente du point de vue de son comportement mécanique, par exemple un assemblage de plusieurs tiges et/ou barres et/ou bandes.

Dans un mât selon l'invention, avantageusement, chaque étage de l'ossature comprend plusieurs plaquettes, et s'étend en forme générale de couronne autour de l'axe de déploiement, l'ossature s'étendant autour de l'axe de déploiement. En outre, chaque plaquette présente une forme au repos cintrée en forme de portion de cylindre (à base circulaire (cylindre de révolution) ou non circulaire, par exemple elliptique ou polygonale) à axe longitudinal parallèle à l'axe de déploiement et à convexité orientée vers l'extérieur.

Dans une variante de réalisation, les plaquettes de chaque étage sont adaptées pour que l'étage présente, à l'état déployé, une section de forme globalement symétrique de révolution autour de l'axe de déploiement, l'ossature présentant également, à l'état déployé, une forme générale symétrique de révolution autour de l'axe de déploiement. D'autres variantes sont possibles. Par exemple, les plaquettes de chaque étage peuvent être adaptées pour que l'étage présente, à l'état déployé, une section de forme polygonale (ossature prismatique) et/ou symétrique par rapport à l'axe de déploiement...

Avantageusement, dans un mât selon l'invention, deux plaquettes adjacentes d'un même étage sont articulées l'une à l'autre par une liaison pivot, dite liaison inter-plaquettes, d'axe contenu dans un plan contenant l'axe de déploiement. Ainsi, les plaquettes adjacentes d'un même étage peuvent pivoter l'une par rapport à l'autre, de façon à permettre le passage de l'état replié à l'état déployé. Avantageusement et selon l'invention, l'axe de chaque liaison inter-plaquettes est au moins sensiblement normal à chaque plaquette reliée par cette liaison.

Par ailleurs, dans les différents modes de réalisation de l'invention, avantageusement, chaque plaquette d'un étage est articulée à une plaquette de chaque étage adjacent par charnière, dite charnière inter-étages, formant une liaison pivot d'axe orthogonal à l'axe de déploiement, chaque charnière inter-étages étant adaptée pour pouvoir subir une flexion élastique correspondant à celle des plaquettes qu'elle relie au cours du déploiement. De préférence, avantageusement et selon l'invention, chaque plaquette est formée d'une pièce pleine et en ce que chaque charnière inter-étages est formée d'une charnière du type à film ou pont flexible, ou formée d'au moins deux gonds.

Avantageusement et selon l'invention, les liaisons inter-plaquettes d'un même étage sont interposées entre deux charnières inter-étages, l'une interne, l'autre externe à l'état replié. Par ailleurs, avantageusement et selon l'invention, la largeur L de chaque plaquette prise selon la direction théorique passant par les deux liaisons inter-plaquettes de cette plaquette est supérieure ou égale à la longueur axiale ℓ1, ℓ2 de chaque charnière inter-étages de cette plaquette. Avantageusement et selon l'invention, la longueur axiale ℓ1 de chaque charnière inter-étages interne est inférieure ou égale à la longueur axiale ℓ2 de chaque charnière inter-étages externe.

Un mât selon l'invention peut être conçu pour pouvoir se déployer spontanément et automatiquement jusqu'à l'état déployé. Néanmoins, rien n'empêche de prévoir, si nécessaire, un dispositif d'entraînement du déploiement de l'ossature, apte à assurer le déploiement total de l'ossature jusqu'à l'état déployé. Dans une variante de réalisation avantageuse d'un mât selon l'invention, ledit dispositif d'entraînement comprend un tube gonflable (ou vessie) s'étendant le long de l'ossature, et présentant une extrémité proximale reliée à une source de gaz comprimé, et une extrémité distale reliée à une extrémité axiale distale de l'ossature. Ainsi, un mât selon l'invention comprend en combinaison une ossature repliée déployable formée de plaquettes articulées, et un tube gonflable concourant au déploiement de cette ossature. De préférence, le tube gonflable s'étend à l'intérieur de l'ossature, et est relié aux charnières inter-étages internes. En variante et selon l'invention, le tube gonflable s'étend à l'extérieur de l'ossature, et est relié aux charnières inter-étages externes.

Dans un mât selon l'invention, chaque plaquette est avantageusement d'un seul tenant, rigide en flexion selon une direction longitudinale contenue dans un plan longitudinal passant par l'axe de déploiement, mais flexible selon une direction, dite direction transversale, orthogonale à la direction longitudinale. Autrement dit, chaque plaquette est rigide et ne peut pas être sensiblement fléchie longitudinalement, mais peut être fléchie transversalement (par cintrage autour de la direction longitudinale). De préférence, l'axe de chaque charnière inter-étages s'étend, à l'état replié, dans un plan tangent aux deux plaquettes reliées par cette liaison.

Chaque plaquette peut être formée d'une seule pièce ou de plusieurs pièces assemblées rigidement les unes aux autres. Elle peut être pleine ou plus ou moins évidée. Avantageusement et selon l'invention, chaque charnière inter-étages est formée d'une charnière choisie dans le groupe formé des charnières du type à film flexible, des charnières du type pont flexible, des charnières du type piano et des charnières formées d'au moins deux gonds.. Par ailleurs, avantageusement et selon l'invention, l'axe de chaque liaison inter-plaquettes est au moins sensiblement normal à chaque plaquette reliée par cette liaison.

Par ailleurs, avantageusement, un mât selon l'invention comprend un réceptacle apte à contenir l'ossature à l'état replié, et présentant une extrémité distale formant une ouverture à travers laquelle l'ossature peut être déployée longitudinalement, et en ce que l'extrémité distale du réceptacle est pourvue de languettes flexibles s'étendant radialement vers l'intérieur et venant coopérer avec les plis de l'ossature de façon à en freiner le déploiement et à lui donner une direction. Ces languettes élastiques, de préférence uniformément réparties autour de l'axe de déploiement et adaptées pour pouvoir exercer des efforts radiaux égaux et équilibrés, ont également pour fonction d'imposer la direction de déploiement du mât (fonction de guidage).

L'invention concerne également un mât déployable caractérisé en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées, représentant, à titre d'exemple non limitatif, un mode de réalisation de l'invention, et dans lesquelles :
- la figure 1 est une vue schématique de profil d'un mât selon l'invention à l'état déployé,
- la figure 2 est une vue schématique en perspective d'un mât selon l'invention en cours de déploiement,
- la figure 3 est une vue schématique en coupe transversale d'un mât selon l'invention à l'état déployé,
- la figure 4 est une vue schématique en coupe transversale d'un mât l'invention à l'état replié,
- la figure 5 est une vue schématique en coupe axiale d'un mât selon l'invention à l'état replié,
- la figure 6 est un schéma de détail illustrant la cinématique de l'ossature d'un mât selon l'invention à l'état déployé.

Le mât déployable selon l'invention représenté sur les figures est un mât déployable comprenant une ossature 1 repliée en accordéon et formée d'une pluralité d'étages 2, 3 articulés les uns aux autres deux à deux, se succédant en prolongement les uns des autres deux à deux empilés selon un axe 4 longitudinal de l'ossature 1 qui constitue un axe 4 de déploiement de cette ossature 1 et du mât, chaque étage 2, 3 étant lui-même formé d'une pluralité de plaquettes 5 articulées deux à deux.

Le mât comprend également un réceptacle 7 qui contient l'ossature 1 à l'état replié. Ce réceptacle 7 est en forme générale de manchon cylindrique et présente une base 8 fixée sur un châssis non représenté de l'appareil qui reçoit le mât (par exemple la plateforme d'un satellite). Dans tout le texte, le terme « proximal » et ses dérivés désignent des portions situées du côté du réceptacle 7 du châssis auxquelles il est relié, tandis que le terme « distal » et ses dérivés désignent au contraire des portions situées du côté de l'extrémité du mât la plus éloignée du réceptacle 7 à l'état déployé.

Le réceptacle 7 forme un boîtier globalement cylindrique et présente, à l'opposé de la base 8, une ouverture 9 de déploiement dotée de languettes 11 flexibles s'étendant radialement vers l'intérieur à partir de la paroi cylindrique de ce réceptacle 7.

Le réceptacle 7 est doté, à l'opposé de sa base 8, à recouvrement des languettes 11, d'un couvercle 10 amovible normalement maintenu en place par rapport au corps principal 12 du réceptacle 7 par des organes 13 de verrouillage associé à un dispositif de commande de déclenchement permettant de commander le déverrouillage de ces organes 13.

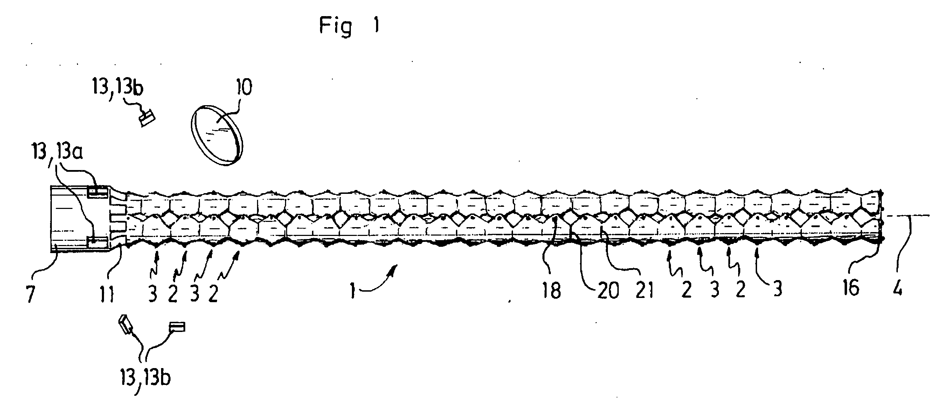

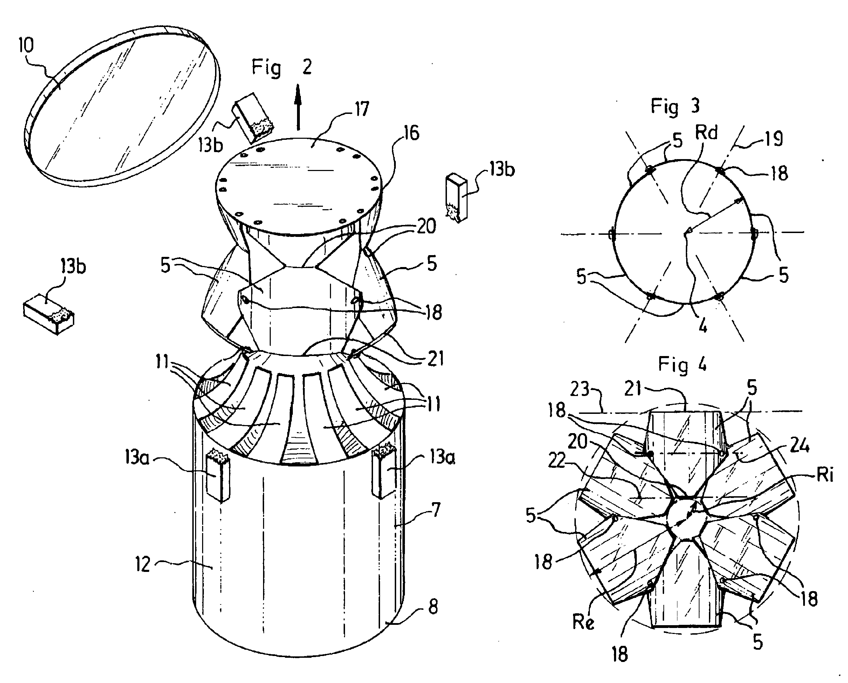

De tels organes 13 de verrouillage pouvant être déverrouillés sur commande, peuvent faire l'objet de nombreuses différentes variantes de réalisation. Dans une forme de réalisation représentée à titre d'exemple sur les figures, les organes 13 de verrouillage sont formés de crochets 13 comprenant une première partie 13a solidaire du corps 12 et une deuxième partie 13b venant recouvrir le couvercle 10 pour le maintenir en place. Les deux parties 13a, 13b sont normalement maintenues fixes l'une par rapport à l'autre, mais peuvent être séparées sous l'effet d'une commande de déclenchement. Par exemple, les deux parties 13a, 13b sont reliées l'une et l'autre par un dispositif pyrotechnique (non représenté), une portion en alliage à mémoire de forme, un actionneur électromagnétique, un actionneur à paraffine,... commandé par un câble électrique (non représenté). Lorsqu'un courant électrique est appliqué au dispositif pyrotechnique, ce dernier explose et sépare les deux parties 13a, 13b du crochet 13 correspondant, ce qui libère le couvercle 10 et permet le déploiement de l'ossature 1 comme représenté figures 1 et 2.

Pour chaque étage 2, 3 de l'ossature 1, les plaquettes 5 sont reliées deux à deux, deux plaquettes 5 adjacentes étant articulées l'une à l'autre par une liaison pivot, dite liaison 18 inter-plaquettes, d'axe 19 contenu dans un plan contenant l'axe 4 de déploiement. L'axe 19 de chaque liaison 18 inter-plaquettes est orienté (aussi bien à l'état replié qu'à l'état déployé) selon une direction normale à chaque plaquette 5 reliée par cette liaison 18 inter-plaquettes. Chaque liaison 18 inter-plaquettes peut être formée par exemple par un rivet, un boulon, une cheville... reliant les deux plaquettes.

Chaque plaquette 5 d'un étage 2, 3 est articulée à une plaquette 5 de chaque étage 3, 2 adjacent par une charnière, dite charnière 20, 21 inter-étages, formant une liaison pivot d'axe 22, 23 orthogonal à l'axe 4 de déploiement, c'est-à-dire contenu dans un plan transversal à l'axe 4 de déploiement, et s'étendant dans un plan tangent à chaque plaquette 5 reliée par cette charnière. Chaque charnière 20, 21 inter-étages est en outre adaptée pour pouvoir subir une certaine flexion élastique selon son axe, correspondant à celle des plaquettes 5 qu'elle relie, au cours du déploiement.

Les liaisons 18 inter-plaquettes d'un même étage 2, 3 sont contenues dans un même plan transversal, et, pour chaque plaquette 5, sont interposées entre deux charnières 20, 21 inter-étages reliant cette plaquette 5 à des étages adjacents, à savoir une charnière 20 inter-étages interne, et une charnière 21 inter-étages externe. Une charnière 20 inter-étages interne est repliée radialement vers l'intérieur et se déplace radialement vers l'extérieur au cours du déploiement. Une charnière 21 inter-étages externe est repliée radialement vers l'extérieur et se déplace radialement vers l'intérieur au cours du déploiement. Ainsi, l'ossature 1 est repliée en accordéon et se déploie comme un accordéon.

Dans le mode de réalisation représenté, chaque plaquette 5 est une portion de plaque pleine courbe d'épaisseur constante réalisée en un matériau synthétique, qui peut être avantageusement un matériau polymérique thermoplastique, thermodurcissable, ou composite ou métallique. Chaque plaquette 5 présente au repos une forme générale courbe de telle sorte qu'à l'état déployé de l'ossature 1, chaque plaquette 5 présente une section droite transversale de forme courbe autour de l'axe 4 de déploiement. Autrement dit, au repos, chaque plaquette 5 est cintrée en forme générale de tuile autour d'un axe qui constitue sa direction longitudinale contenue dans un plan longitudinal passant par l'axe 4 de déploiement (c'est-à-dire qu'elle est courbée selon une direction transversale orthogonale à cette direction longitudinale). Par contre, chaque plaquette 5 est rigide -notamment plus rigide- en flexion selon cette direction longitudinale, notamment de telle sorte qu'à l'état déployé, elle résiste au flambage. De préférence, chaque plaquette 5 est formée d'une plaque pleine qui, au repos, est cintrée en forme générale de tuile (portion de cylindre, notamment de cylindre de révolution), mais qui est flexible selon sa direction transversale de façon à pouvoir être aplatie en forme générale de plaque plane à l'état replié de l'ossature 1.

Les formes et dimensions générales de l'ossature 1, de chaque plaquette 5, le nombre des différentes plaquettes 5 par étage, sont de préférence choisies de telle sorte que, à l'état déployé de l'ossature 1, chaque plaquette 5 se trouve au moins sensiblement dans sa forme au repos (cintrée en forme de tuile) et que, à l'état replié de l'ossature 1, chaque plaquette 5 se trouve au moins sensiblement aplatie en forme plaque plane. Rien n'empêche cependant en variante de prévoir que l'aplatissement de chaque plaquette 5 à l'état replié de l'ossature 1 ne soit pas réalisé jusqu'à obtenir une forme parfaitement plane, chaque plaquette 5 étant encore légèrement cintrée et/ou que chaque plaquette 5 se trouve encore déformée en flexion avec certaines contraintes élastiques de flexion résiduelles à l'état déployé de l'ossature 1. Néanmoins, en tout état de cause, les contraintes élastiques de déformation en flexion résiduelles de chaque plaquette 5 à l'état déployé de l'ossature 1 sont inférieures aux contraintes élastiques de flexion de la même plaquette 5 à l'état replié. De la sorte, à partir de l'état replié, dès que l'ossature 1 est libérée, cette dernière se déploie spontanément sous l'effet des contraintes élastiques résiduelles de flexion de chaque plaquette 5. De préférence, l'ossature 1 est adaptée de telle sorte que ce déploiement automatique sous l'effet des contraintes élastiques des plaquettes 5 à l'état replié se produise jusqu'à l'état déployé (complètement) de l'ossature 1.

Rien n'empêche de prévoir cependant, en variante non représentée, un dispositif d'entraînement du déploiement de l'ossature 1, par exemple comprenant un tube gonflable se déployant selon l'axe 4 de déploiement, et s'étendant le long de l'ossature 1. Un tel tube gonflable peut être par exemple formé d'une poche tubulaire d'un film étanche aux gaz de dimensions similaires à celles de l'ossature 1 de façon à pouvoir être déployé avec cette ossature 1 et entraîner le déploiement de cette dernière. Le tube gonflable s'étend à l'intérieur ou à l'extérieur de l'ossature 1 et est relié à cette dernière, au moins à son extrémité distale. Un tuyau de gonflage peut être prévu à la base 8 du réceptacle 7 communiquant avec l'intérieur du tube gonflable de façon à permettre le gonflage de ce dernier à partir d'une source de gaz comprimé.

En outre, les charnières 20, 21 inter-étages sont des charnières de type film ou pont flexible, c'est-à-dire formées chacune d'une bande souple de moindre épaisseur reliant les deux plaquettes considérées, cette bande pouvant être issue de l'usinage, en diminution d'épaisseur, des plaquettes (les différentes plaquettes 5 reliées les unes aux autres successivement par les charnières 20, 21 inter-étages constituant une bande continue s'étendant parallèlement à l'axe de déploiement), ou issue de moulage ou au contraire rapportée collée sur chaque plaquette. Dans ce dernier cas, la bande formant charnière n'est pas nécessairement formée de la même matière que les plaquettes. Elle peut notamment être formée d'une portion de feuille ou d'un film métallique, par exemple de feuille d'aluminium. Les charnières 20, 21 inter-étages peuvent également être constituées chacune d'au moins deux gonds coaxiaux. D'autres formes de réalisation sont possibles.

L'ossature 1 comprend deux types d'étages. Un étage 2 selon un premier type comprend une charnière 20 inter-étages interne du côté proximal, et une charnière 21 inter-étages externe du côté distal. Un étage 3 selon le deuxième type comprend une charnière 21 inter-étages externe du côté proximal, et une charnière 20 inter-étages interne du côté distal.

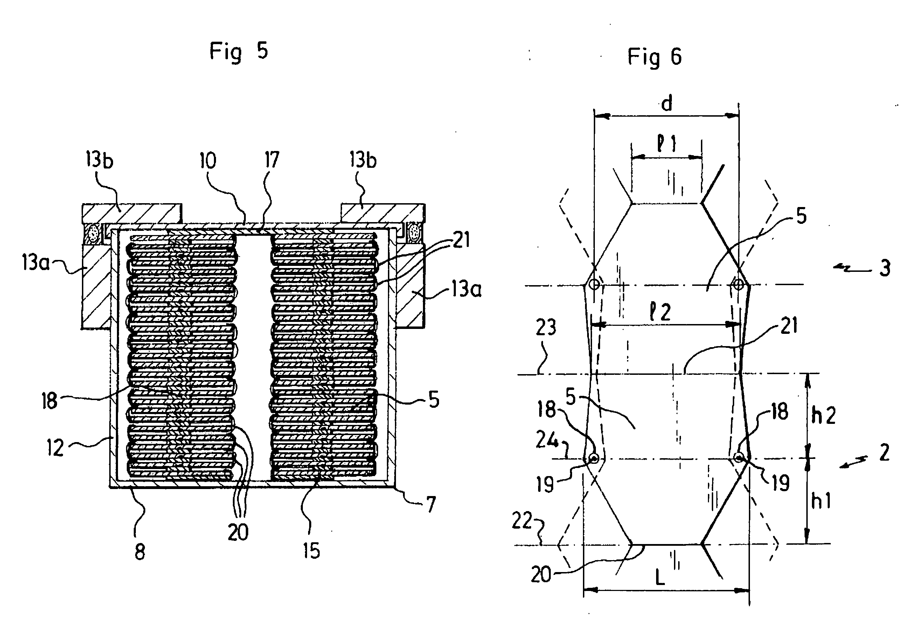

L'ossature 1 présente, à son extrémité proximale 15, un étage qui, dans l'exemple de réalisation représentée figure 5, est un étage 3 du deuxième type (mais avec h2 = 0, h2 étant la distance séparant la direction théorique 24 reliant les liaisons 18 inter-plaquettes de la charnière 21 inter-étages externe d'une plaquette 5), solidaire de la base 8. L'ossature 1 est dotée, à son extrémité distale 16, d'un couvercle 17 d'extrémité.

Les axes 22, 23 des charnières 20, 21 inter-étages et la direction théorique 24 qui relie les points d'intersection des axes 19 des liaisons 18 inter-plaquettes d'une plaquette 5 sont parallèles et orthogonaux à l'axe 4 de déploiement. En outre, les deux liaisons 18 inter-plaquettes reliant une même plaquette 5 à deux plaquettes 5 du même étage, respectivement de chaque côté, sont interposées entre les deux charnières 20, 21 inter-étages reliant respectivement cette plaquette 5 aux deux étages adjacents. Autrement dit, la direction théorique 24 passant par les liaisons 18 inter-plaquettes est interposée entre les deux charnières 20, 21 inter-étages de la plaquette 5.

Dans toute position de l'ossature 1 correspondant à un état replié ou partiellement replié, les axes 19 des liaisons 18 inter-plaquettes ne sont pas perpendiculaires à l'axe 4 de déploiement, de sorte que les différentes plaquettes 5 peuvent pivoter deux à deux les unes par rapport aux autres pour adopter des positions relatives où elles présentent une forme de moindre contrainte élastique résiduelle de flexion. En particulier, dans le mode de réalisation représenté les plaquettes 5 sont au moins sensiblement aplaties de façon à être planes à l'état replié de l'ossature 1, et se courbent en flexion pour revenir vers leur forme au repos courbée au cours du déploiement.

Par contre, une discontinuité de géométrie se produit lorsque l'ossature 1 passe à l'état déployé. En effet, à l'état déployé, les axes 19 des liaisons 18 inter-plaquettes sont perpendiculaires à l'axe 4 de déploiement, de sorte que les différentes plaquettes 5 d'un même étage ne peuvent plus pivoter les unes par rapport aux autres deux à deux autour de ces axes 19. Les différentes plaquettes 5 et leurs charnières 20, 21 inter-étages se courbent alors selon une direction, dite direction transversale, orthogonale à la direction longitudinale de la plaquette 5 qui est contenue dans un plan longitudinal passant par l'axe 4 de déploiement, et qui, à l'état déployé, est parallèle à cet axe 4 de déploiement.

À l'état déployé, chaque plaquette 5 présente une forme correspondant à sa forme au repos, ou à une forme dans laquelle elle est déformée élastiquement en flexion selon la direction transversale avec des contraintes minimum élastiques de déformation en flexion, notamment inférieures aux contraintes élastiques de déformation en flexion de cette plaquette 5 à l'état replié de l'ossature 1, ce qui confère un effet de verrouillage de l'ossature 1 à l'état déployé, et, par construction, une très grande stabilité de cette ossature 1 à l'état déployé.

En outre, à l'état déployé, les plaquettes 5 des différents étages se trouvent alignées les unes par rapport aux autres selon leur direction longitudinale parallèle à l'axe 4 de déploiement et, du fait de la courbure en flexion qu'elles présentent à l'état déployé mentionnée ci-dessus, forment des montants longitudinaux de l'ossature 1, chaque montant ainsi formé présentant une section droite transversale courbée produisant un effet de blocage en flambage interdisant tout repliage intempestif des plaquettes 5 et des étages les uns par rapport aux autres sous l'effet d'un éventuel effort de compression axiale pouvant être exercé parallèlement à l'axe 4 de déploiement. Ainsi, la courbure des plaquettes 5 et des charnières 20, 21 à l'état déployé forme un effet de tuilage qui, combiné à la discontinuité géométrique lors du passage à l'état déployé et à au fait que les plaquettes 5 sont le siège de contraintes élastiques en flexion minimums ou nulles, produit une très grande résistance en flambage de l'ossature 1 à l'état déployé et un blocage de l'ossature 1 à l'état déployé.

Ainsi, dans un mât selon l'invention, l'ossature 1 se déploie spontanément à partir de l'état replié, mais un retour à l'état replié est normalement impossible, de sorte que le déploiement est irréversible. L'ossature 1 adopte, à l'état déployé, du simple fait de sa géométrie et de sa construction, une forme stable (avec des contraintes résiduelles minimums ou nulles au sein des plaquettes 5 assurant cette stabilité), globalement symétrique autour de l'axe 4 de déploiement, notamment globalement cylindrique de révolution, et est rigide en compression axiale longitudinale et en flexion. L'ossature 1 détermine alors la forme et les dimensions du mât.

Chaque étage comprend un nombre N de plaquettes 5, de préférence constant pour tous les étages sur toute la longueur de l'ossature 1. N est supérieur ou égal à trois, et est avantageusement compris entre cinq et dix, par exemple égal à six. Ce nombre N et la distance d séparant les liaisons 18 inter-plaquettes de chaque plaquette 5, qui est également de préférence constante, c'est-à-dire la même pour toutes les plaquettes 5, au moins au sein d'un étage, et de préférence pour tous les étages, déterminent la dimension radiale de l'ossature 1 à l'état déployé. Ainsi, dans le cas de plaquettes 5 qui sont élastiquement flexibles selon la direction transversale normalement cintrées, au repos, selon cette direction transversale (c'est-à-dire autour de la direction longitudinale) de façon à se courber selon la direction transversale en forme générale de tuile lorsque l'ossature 1 arrive à l'état déployé, on a : d x N=2πRd, Rd étant le rayon de l'ossature 1 cylindrique de révolution à l'état déployé.

Par ailleurs, pour permettre le conditionnement initial de l'ossature 1 repliée en accordéon, pour chaque plaquette 5, la charnière 20 inter-étages interne présente une longueur ℓ1 inférieure à la distance d séparant les deux liaisons 18 inter-plaquettes de cette plaquette 5. Cette longueur ℓ1 dépend aussi de la distance h1 qui sépare la charnière 20 inter-étages interne de la direction théorique 24 reliant les liaisons 18 inter-plaquettes, déterminant les dimensions radiales internes de l'ossature 1 à l'état replié permettant le passage du tube gonflable 6. On doit avoir N x ℓ1 ≤ 2πRi, Ri étant le rayon du cylindre théorique inscrit à l'intérieur des plaquettes à l'état replié, qui dépend de h1 et de Rd.

L'espace libre, matérialisé par ce cylindre inscrit intérieur, peut servir de réceptacle à un éventuel harnais composé de câbles d'alimentation de mesure s'étendant de la partie proximale à la partie distale du mât.

La résistance en flambage de l'ossature 1 à l'état déployé est déterminée par la plus petite section transversale des montants formés par la succession des plaquettes 5 des différents étages le long de l'ossature 1. Cette plus petite section transversale est déterminée par la longueur ℓ1 des charnières 20 inter-étages internes. En effet, il n'y a pas d'intérêt à prévoir que la longueur ℓ2 des charnières 21 inter-étages externes soit plus petite que la longueur ℓ1 des charnières 20 inter-étages internes, ce qui diminuerait inutilement la résistance en flambage. Quelle que soit la forme de réalisation des plaquettes 5, de préférence, elles comprennent une continuité de matière entre les charnières 20, 21 inter-étages, au moins sur une largeur (selon la direction transversale) correspondant à la longueur ℓ1 de façon à transmettre les contraintes axiales en flambage sur une section correspondant à cette longueur ℓ1.

En conséquence, dans un mât selon l'invention, de préférence, ℓ2 ≥ ℓ1. Compte tenu de ce qui précède, il convient de choisir les dimensions et caractéristiques de chaque plaquette 5 et des charnières 20, 21, notamment ℓ1, ℓ2, d, son épaisseur et son module d'élasticité pour que chaque plaquette 5 présente effectivement une forme cintrée (tuilage) à l'état déployé de l'ossature 1. On choisit de préférence une longueur ℓ2 de l'ordre de la distance d séparant les deux liaisons 18 inter-plaquettes (ℓ2 ≈ d). Dans un mode de réalisation non représenté, ℓ2 peut être du même ordre que la largeur L de la plaquette 5 prise selon la direction 24 passant par les liaisons 18 inter-plaquettes (ℓ2 ≈ L). Dans le mode de réalisation représenté, ℓ2 < L et ℓ2 ≈ d.

Quoiqu'il en soit, il n'y a pas en général d'intérêt à ce que la longueur ℓ2 des charnières 21 inter-étages externes soit supérieure à la largeur L des plaquettes 5 prise selon la direction 24 passant par les deux liaisons 18 inter-plaquettes. En conséquence, dans un mât selon l'invention, de préférence, ℓ2 ≤ L. Ainsi, la largeur L d'une plaquette 5 prise selon la direction 24 passant par les deux liaisons 18 inter-plaquettes est supérieure ou égale à la longueur axiale ℓ1, ℓ2 de chaque charnière 20, 21 inter-étages. En tout état de cause, on doit avoir N x ℓ2 ≤ 2πRe, Re étant le rayon du cylindre théorique circonscrivant les plaquettes à l'état replié.

La distance h2 séparant la direction théorique 24 reliant les liaisons 18 inter-plaquettes de la charnière 21 inter-étages externe d'une plaquette 5 détermine l'encombrement radial externe hors tout de l'ossature 1 à l'état replié et, pour une même longueur axiale de l'ossature 1 à l'état déployé, la hauteur totale de cette ossature 1 à l'état replié. Plus h2 est grande, plus l'encombrement radial externe hors tout de l'ossature 1 à l'état replié (c'est-à-dire le rayon Re) est grand et plus sa hauteur à l'état replié est faible. Ainsi, h2 détermine les dimensions générales du réceptacle 7.

De préférence, on choisit h1 = h2, c'est-à-dire que la direction théorique 24 passant par les liaisons 18 inter-plaquettes est à mi-distance des deux charnières 20, 21 inter-étages. En effet, cette géométrie permet de conférer au réceptacle 7 un encombrement compact présentant un facteur de forme minimum (rapport de sa plus grande dimension sur sa plus petite dimension).

De préférence, le dernier étage distal de l'ossature 1 formant son extrémité distale 16, est un étage 2 du premier type, mais pour lequel h2 = 0, c'est-à-dire qui se termine au niveau des liaisons 18 inter-plaquettes où il est refermé par le couvercle 17.

Par ailleurs, les languettes élastiques 11 du réceptacle 7 qui freinent et guident le déploiement de l'ossature 1 lors du gonflage de telle sorte que ce déploiement soit progressif, s'étendent radialement sur une distance telle que leurs extrémités internes libres radiales ménagent une ouverture de rayon inférieur au rayon Re déterminant l'encombrement radial externe de l'ossature 1 à l'état replié et supérieur au rayon Ri déterminant l'encombrement radial interne de l'ossature 1 à l'état replié.

Un mât déployable selon l'invention présente l'avantage en combinaison d'être particulièrement simple, peu coûteux, de déploiement facile et fiable, de faible masse, de faible encombrement à l'état replié, de présenter des dimensions et une forme précisément déterminées, et des propriétés mécaniques de résistance en flexion et en flambage excellentes, et de pouvoir être réalisé de façon compatible avec son embarquement sur un système spatial.

L'invention peut faire l'objet de nombreuses variantes de réalisation par rapport aux modes de réalisation préférentiels représentés sur les figures et décrits ci-dessus. En particulier, il est possible de prévoir que l'ossature s'étende à l'intérieur d'un tube de gonflage ; que les différentes plaquettes soient formées non pas de portions de plaques pleines, mais de plusieurs pièces assemblées rigidement les unes aux autres, par exemple des bandes, des tiges, des barres...

## Revendications

1. Mât déployable selon un axe (4) de déploiement longitudinal, comprenant :
- une ossature (1) formée d'une succession d'étages (2, 3) articulés les uns aux autres deux à deux en prolongement les uns des autres selon l'axe de déploiement, ladite ossature (1) étant adaptée pour pouvoir être placée, soit dans un état replié où les étages (2, 3) sont repliés les uns sur les autres longitudinalement et occupent un encombrement axial minimum, soit dans un état déployé où ils définissent une forme prédéterminée,
- un dispositif de commande du déclenchement du déploiement associé à ladite ossature (1) de façon à pouvoir autoriser son déploiement longitudinal à l'état déployé à partir de l'état replié,
- les étages (2, 3) étant articulés les uns aux autres par des charnières, chaque charnière étant contenue dans un plan transversal orthogonal à l'axe de déploiement, de sorte que, dans l'état replié, l'ossature (1) soit repliée en accordéon,
- chaque étage de l'ossature (1) comprenant au moins trois plaquettes (5) articulées deux à deux, et s'étend autour de l'axe (4) de déploiement, :
**caractérisé en ce que** :
- chaque plaquette (5) présente au repos une forme générale courbe,
- les plaquettes (5) de chaque étage (2,3) de l'ossature (1) et les liaisons (18, 20, 21) d'articulation des plaquettes (5) entre elles et entre les étages (2, 3) sont adaptées pour que, dans l'état déployé de l'ossature (1) :
- chaque plaquette (5) présente une section droite transversale de forme courbe autour de l'axe (4) de déploiement,
- l'ossature (1) adopte du fait de sa géométrie et de son assemblage, une forme stable rigide en compression axiale, avec un effet de blocage en flambage interdisant tout repliage intempestif des plaquettes (5) et des étages (2, 3) les uns par rapport aux autres selon l'axe de déploiement.

2. Mât selon la revendication 1, **caractérisé en ce que** chaque plaquette (5) est d'un seul tenant, rigide en flexion selon une direction longitudinale contenue dans un plan longitudinal passant par l'axe (4) de déploiement, mais flexible selon une direction, dite direction transversale, orthogonale à la direction longitudinale, et **en ce que** la forme au repos de chaque plaquette est adaptée pour que, à l'état replié, chaque plaquette soit déformée élastiquement en flexion avec des contraintes élastiques de flexion aptes à au moins initier le déploiement de l'ossature (1) à partir de l'état replié.

3. Mât selon la revendication 2, **caractérisé en ce que** la forme au repos de chaque plaquette est adaptée pour que, à l'état déployé, chaque plaquette présente une forme correspondant soit à sa forme au repos, soit à une forme dans laquelle elle est déformée élastiquement en flexion avec des contraintes élastiques de déformation en flexion inférieures aux contraintes élastiques de flexion de la plaquette à l'état replié.

4. Mât selon l'une des revendications 1 à 3, **caractérisé en ce que** les plaquettes (5) sont aplaties à l'état replié.

5. Mât selon l'une des revendications 1 à 4, **caractérisé en ce que** les différents étages (2, 3) comportent tous un même nombre de plaquettes (5) de mêmes dimensions.

6. Mât selon l'une des revendications 1 à 5, **caractérisé en ce que** chaque étage de l'ossature (1) s'étend en forme générale de couronne autour de l'axe (4) de déploiement, l'ossature (1) s'étendant autour de l'axe (4) de déploiement, et **en ce que** chaque plaquette (5) présente une forme au repos cintrée en forme de portion de cylindre à axe longitudinal parallèle à l'axe (4) de déploiement et à convexité orientée vers l'extérieur.

7. Mât selon l'une des revendications 1 à 6, **caractérisé en ce que** les plaquettes (5) de chaque étage (2, 3) sont adaptées pour que l'étage présente, à l'état déployé, une section de forme globalement symétrique de révolution autour de l'axe (4) de déploiement, l'ossature (1) présentant également, à l'état déployé, une forme générale symétrique de révolution autour de l'axe (4) de déploiement.

8. Mât selon l'une des revendications 1 à 7, **caractérisé en ce que** les plaquettes (5) présentent une largeur variable d'un étage à l'autre, l'ossature (1) présentant une forme générale non cylindrique à l'état déployé.

9. Mât selon l'une des revendications 1 à 8, **caractérisé en ce que** deux plaquettes (5) adjacentes d'un même étage sont articulées l'une à l'autre par une liaison pivot, dite liaison (18) inter-plaquettes, d'axe (19) contenu dans un plan contenant l'axe (4) de déploiement.

10. Mât selon l'une des revendications 1 à 9, **caractérisé en ce que** chaque plaquette (5) d'un étage (2, 3) est articulée à une plaquette (5) de chaque étage adjacent par une charnière, dite charnière (20, 21) inter-étages, formant une liaison pivot d'axe (22, 23) orthogonal à l'axe de déploiement, chaque charnière inter-étages étant adaptée pour pouvoir subir une flexion élastique correspondant à celle des plaquettes (5) qu'elle relie au cours du déploiement.

11. Mât selon les revendications 9 et 10, **caractérisé en ce que** les liaisons (18) inter-plaquettes d'un même étage sont interposées entre deux charnières (20, 21) inter-étages, l'une (20) interne, l'autre (21) externe à l'état replié.

12. Mât selon la revendication 11, **caractérisé en ce que** la largeur (L) de chaque plaquette (5) prise selon la direction théorique (24) passant par les deux liaisons (18) inter-plaquettes de cette plaquette (5) est supérieure ou égale à la longueur axiale (ℓ1, ℓ2) de chaque charnière (20, 21) inter-étages de cette plaquette (5).

13. Mât selon l'une des revendications 10 à 12, **caractérisé en ce que** chaque charnière (20, 21) inter-étages est formée d'une charnière choisie dans le groupe formé des charnières du type à film flexible, des charnières du type pont flexible, des charnières du type piano et des charnières formées d'au moins deux gonds.

14. Mât selon la revendication 9 et l'une des revendications 1 à 13, **caractérisé en ce que** l'axe (19) de chaque liaison (18) inter-plaquettes est au moins sensiblement normal à chaque plaquette (5) reliée par cette liaison (18).

15. Mât selon l'une des revendications 1 à 14, **caractérisé en ce qu'**il comprend un réceptacle (7) apte à contenir l'ossature (1) à l'état replié, et présentant une extrémité distale formant une ouverture à travers laquelle l'ossature (1) peut être déployée longitudinalement, et **en ce que** l'extrémité distale du réceptacle (7) est pourvue de languettes (11) flexibles s'étendant radialement vers l'intérieur et venant coopérer avec les plis de l'ossature (1) de façon à guider et en freiner le déploiement.

## Claims

1. Mast deployable along a longitudinal deployment axis (4), comprising:
- a framework (1) formed of a succession of stages (2, 3) articulated to one another in pairs forming a continuation of one another along the deployment axis, the said framework (1) being adapted to be able to be placed either in a folded state where the stages (2, 3) are folded onto one another longitudinally and take up a minimum axial space, or in an deployed state where they define a predetermined shape,
- a device for controlling the triggering of the deployment, which is associated with the said framework (1) so as to be able to permit its longitudinal deployment into the deployed state from the folded state,
- the stages (2, 3) being articulated to one another by hinges, each hinge being contained in a transverse plane orthogonal to the deployment axis, so that, in the folded state, the framework (1) is folded in the form of an accordion,
- each stage of the framework (1) comprising at least three panels (5) articulated in pairs, and extends about the deployment axis (4),
**characterised in that**:
- each panel (5) has at rest a curved general shape,
- the panels (5) of each stage (2, 3) of the framework (1) and the articulation connections (18, 20, 21) of the panels (5) between one another and between the stages (2, 3) are adapted so that, in the deployed state of the framework (1):
- each panel (5) has a transverse section of curved shape about the deployment axis (4),
- the framework (1) assumes, owing to its geometry and its assembly, a stable form which is rigid against axial compression, with a blocking effect against buckling preventing any unintentional folding of the panels (5) and the stages (2, 3) in relation to one another along the deployment axis.

2. Mast according to Claim 1, **characterised in that** each panel (5) is of one piece, flexurally rigid in a longitudinal direction contained in a longitudinal plane passing through the deployment axis (4), but flexible in a direction, called the transverse direction, orthogonal to the longitudinal direction, and **in that** the shape at rest of each panel is adapted so that, in the folded state, each panel is flexurally elastically deformed with flexural elastic stresses capable of at least initiating the deployment of the framework (1) from the folded state.

3. Mast according to Claim 2, **characterised in that** the shape at rest of each panel is adapted so that, in the deployed state, each panel has a shape corresponding either to its shape at rest or to a shape in which it is flexurally elastically deformed with flexural elastic deformation stresses which are lower than the flexural elastic stresses of the panel in the folded state.

4. Mast according to one of Claims 1 to 3, **characterised in that** the panels (5) are flat in the folded state.

5. Mast according to one of Claims 1 to 4, **characterised in that** the different stages (2, 3) all have the same number of panels (5) of the same dimensions.

6. Mast according to one of Claims 1 to 5, **characterised in that** each stage of the framework (1) extends in the general shape of a crown about the deployment axis (4), the framework (1) extending about the deployment axis (4), and **in that** each panel (5) has a shape at rest curved in the shape of portion of a cylinder with the longitudinal axis parallel to the deployment axis (4) and with convexity oriented outwards.

7. Mast according to one of Claims 1 to 6, **characterised in that** the panels (5) of each stage (2, 3) are adapted so that the stage has, in the deployed state, a section of overall rotationally symmetrical shape about the deployment axis (4), the framework (1) also having, in the deployed state, a rotationally symmetrical general shape about the deployment axis (4).

8. Mast according to one of Claims 1 to 7, **characterised in that** the panels (5) have a variable width from one stage to the other, the framework (1) having a non-cylindrical general shape in the deployed state.

9. Mast according to one of Claims 1 to 8, **characterised in that** two adjacent panels (5) of the same stage are articulated to one another by a pivot connection, called the inter-panel connection (18), with an axis (19) contained in a plane containing the deployment axis (4).

10. Mast according to one of Claims 1 to 9, **characterised in that** each panel (5) of a stage (2, 3) is articulated to a panel (5) of each adjacent stage by a hinge, called the inter-stage hinge (20, 21), forming a pivot connection with an axis (22, 23) orthogonal to the deployment axis, each inter-stage hinge being adapted to be able to undergo elastic flexion corresponding to that of the panels (5) which it connects in the course of the deployment.

11. Mast according to Claims 9 and 10, **characterised in that** the inter-panel connections (18) of the same stage are interposed between two inter-stage hinges (20, 21), one (20) inner and the other (21) outer in the folded state.

12. Mast according to Claim 11, **characterised in that** the width (L) of each panel (5) taken in the theoretical direction (24) passing through the two inter-panel connections (18) of this panel (5) is greater than or equal to the axial length (ℓ1, ℓ2) of each inter-stage hinge (20, 21) of this panel (5).

13. Mast according to one of Claims 10 to 12, **characterised in that** each inter-stage hinge (20, 21) is formed of a hinge chosen from the group formed of hinges of the flexible film type, hinges of the flexible bridge type, hinges of the piano type and hinges formed of at least two hinge pins.

14. Mast according to Claim 9 and one of Claims 1 to 13, **characterised in that** the axis (19) of each inter-panel connection (18) is at least substantially normal to each panel (5) connected by this connection (18).

15. Mast according to one of Claims 1 to 14, **characterised in that** it comprises a receptacle (7) capable of containing the framework (1) in the folded state, and having a distal end forming an opening through which the framework (1) can be longitudinally deployed, and **in that** the distal end of the receptacle (7) is provided with flexible strips (11) extending radially inwards and cooperating with the folds of the framework (1) so as to guide and brake the deployment.

## Patentansprüche

1. Gemäß einer länglichen Ausbringachse (4) ausbringbarer Mast, umfassend:
- eine Struktur (1), die aus einer Folge von Stockwerken (2, 3) geformt ist, die jeweils zu zweit einander in der Verlängerung einander gemäß der Ausbringachse artikuliert sind, wobei die genannte Struktur (1) angepasst ist, um entweder in einem eingebrachten Zustand, in dem die Stufen (2, 3) jeweils aufeinander in Längsrichtung eingebracht sind und einen axialen Minimum-Platzverbrauch einnehmen, oder in einem ausgebrachten Zustand, in dem sie eine vorbestimmte Form definieren, platziert zu werden,
- eine Steuervorrichtung des Auslösens des Ausbringens, die der genannten Struktur (1) derart zugeordnet ist, dass ihr längliches Ausbringen im ausgebrachten Zustand ab dem eingebrachten Zustand zugelassen wird,
- wobei die Stufen (2, 3) jeweils durch Scharniere artikuliert sind, wobei jedes Scharnier in einer transversalen, zur Ausbringachse orthogonalen Ebene derart enthalten ist, dass die Struktur (1) im eingebrachten Zustand akkordeonförmig eingebracht ist,
- wobei jedes Stockwerk der Struktur (1) wenigstens drei Plaketten (5) umfasst, die zu zweit artikuliert sind, und sich um die Ausbringachse (4) erstreckt, **dadurch gekennzeichnet, dass**
- jede Plakette (5) im Ruhezustand eine allgemeine gekrümmte Form aufweist,
- die Plaketten (5) jedes Stockwerks (2, 3) der Struktur (1) und die Artikulationsverbindungen (18, 20, 21) der Plaketten (5) untereinander und zwischen den Stockwerken (2, 3) angepasst sind, damit im ausgebrachten Zustand der Struktur (1);
- jede Plakette (5) einen geraden Querschnitt in gekrümmter Form um die Ausbringachse (4) aufweist,
- die Struktur (1) aufgrund ihrer Geometrie und ihres Zusammenbaus eine in axialer Kompression steife, stabile Form mit einer Blockierwirkung in der Knickung aufweist, die jegliche unerwünschte Einbringung der Plaketten (5) und der Stockwerke (2, 3) jeweils im Verhältnis zueinander gemäß der Ausbringachse untersagt.

2. Mast gemäß Anspruch 1, **dadurch gekennzeichnet, dass** jede Plakette (5) aus einem einzigen, in der Biegung gemäß einer Längsachse steifen Stück besteht, die in einer Längsebene enthalten ist, die durch die Ausbringachse (4) hindurch läuft, jedoch gemäß einer zur Längsrichtung orthogonalen Richtung, bezeichnet als transversale Richtung, flexibel ist, und dass die Form in der Ruhestellung jeder Plakette angepasst ist, damit jede Plakette im eingebrachten Zustand elastisch in der Biegung mit den elastischen Biegungsbeanspruchungen verformt wird, die geeignet sind, wenigstens das Ausbringen der Struktur (1) ausgehend vom eingebrachten Zustand zu initiieren.

3. Mast gemäß Anspruch 2, **dadurch gekennzeichnet, dass** die Form jeder Plakette in der Ruhestellung geeignet ist, damit jede Plakette in ausgebrachtem Zustand eine Form aufweist, die entweder ihrer Form in der Ruhestellung oder einer Form entspricht, in der sie elastisch in der Biegung mit den elastischen Verformungsbeanspruchungen in der Biegung verformt wird, die die elastischen Biegungsbeanspruchungen der Plakette im eingebrachten Zustand unterschreiten.

4. Mast gemäß Anspruch 1 bis 3, **dadurch gekennzeichnet, dass** die Plaketten (5) im eingebrachten Zustand abgeflacht sind.

5. Mast gemäß Anspruch 1 bis 4, **dadurch gekennzeichnet, dass** die verschiedenen Stockwerke (2, 3) alle eine und dieselbe Anzahl Plaketten (5) derselben Abmessungen umfassen.

6. Mast gemäß Anspruch 1 bis 5, **dadurch gekennzeichnet, dass** jedes Stockwerk der Struktur (1) sich in einer allgemeinen Kronenform um die Ausbringachse (4) erstreckt, wobei sich die Struktur (1) um die Ausbringachse (4) erstreckt, und dass jede Plakette (5) im Ruhezustand eine gebogene Form in Form eines Zylinderabschnitts zur Ausbringachse (4) parallelen Längsachse mit nach außen ausgerichteter Konvexität aufweist.

7. Mast gemäß Anspruch 1 bis 6, **dadurch gekennzeichnet, dass** die Plaketten (5) jedes Stockwerks (2, 3) angepasst sind, damit das Stockwerk im ausgebrachten Zustand einen Abschnitt in global symmetrischer Revolutionsform um die Ausbringachse (4) aufweist, wobei die Struktur (1) ebenfalls im ausgebrachten Zustand eine allgemeine symmetrische Revolutionsform um die Ausbringachse (4) aufweist.

8. Mast gemäß Anspruch 1 bis 7, **dadurch gekennzeichnet, dass** die Plaketten (5) von einem Stockwerk zum anderen eine variable Breite aufweisen, wobei die Struktur (1) im ausgebrachten Zustand eine allgemeine nicht zylindrische Form aufweist.

9. Mast gemäß Anspruch 1 bis 8, **dadurch gekennzeichnet, dass** zwei anliegende Plaketten (5) eines und desselben Stockwerks umeinander durch eine Schwenkverbindung, bezeichnet als Verbindung (18) zwischen den Plaketten, mit einer Achse (19) artikuliert sind, die in der Ausbringachse (4) enthalten ist.

10. Mast gemäß Anspruch 1 bis 9, **dadurch gekennzeichnet, dass** jede Plakette (5) eines Stockwerks (2, 3) an einer Plakette (5) jedes anliegenden Stockwerks durch ein Scharnier, bezeichnet als Scharnier (20, 21) zwischen den Stockwerken, artikuliert ist, die eine Schwenkverbindung mit zur Ausbringachse orthogonalen Achse (22, 23) bilden, wobei jedes Scharnier zwischen den Stockwerken angepasst ist, um eine elastische Biegung erfahren zu können, die der der Plaketten (5) entspricht, die sie im Verlauf des Ausbringens verbindet.

11. Mast gemäß Anspruch 9 und 10, **dadurch gekennzeichnet, dass** die Verbindungen (18) zwischen den Plaketten eines und desselben Stockwerks zwischen zwei Scharnieren (20, 21) zwischen den Stockwerken zwischengeschaltet sind, eine (20) innerhalb, die andere (21) außerhalb des eingebrachten Zustandes.

12. Mast gemäß Anspruch 11, **dadurch gekennzeichnet, dass** die Breite (L) jeder Plakette (5), die gemäß der theoretischen Richtung (24) berücksichtigt wird, die durch die zwei Verbindungen (18) zwischen den Plaketten dieser Plakette (5) hindurch läuft, größer als oder gleich der axialen Länge (l1, l2) jedes Scharniers (20, 21) zwischen den Stockwerken dieser Plakette (5) ist.

13. Mast gemäß Anspruch 10 bis 12, **dadurch gekennzeichnet, dass** jedes Scharnier (20, 21) zwischen den Stockwerken aus einem Scharnier geformt wird, das in der Gruppe ausgewählt ist, die aus Scharnieren vom Typ mit flexibler Folie, Scharnieren vom Typ flexible Brücke, Scharnieren vom Typ Piano und Scharnieren gebildet wird, die aus wenigstens zwei Achsen gebildet werden.

14. Mast gemäß Anspruch 9 und Anspruch 1 bis 13, **dadurch gekennzeichnet, dass** die Achse (19) jeder Verbindung (18) zwischen den Plaketten wenigstens deutlich normal bei jeder Plakette (5) ist, die durch diese Verbindung (18) verbunden wird.

15. Mast gemäß Anspruch 1 bis 14, **dadurch gekennzeichnet, dass** er eine Aufnahme (7) umfasst, die geeignet ist, die Struktur (1) im eingebrachten Zustand zu enthalten, und ein entferntes Ende aufweist, das eine Öffnung bildet, durch die die Struktur (1) in Längsrichtung ausgebracht werden kann, und dass das entfernte Ende der Aufnahme (7) mit flexiblen Laschen (11) versehen ist, die sich radial nach innen erstrecken und mit den Falten der Struktur (1) derart zusammenwirken, dass das Ausbringen geführt und gebremst wird.
